Europäisches Patentamt

European Patent Office

Office européen des brevets

(11) Veröffentlichungsnummer: **0 490 149 B1**

(12) **EUROPÄISCHE PATENTSCHRIFT**

(45) Veröffentlichungstag der Patentschrift: **22.02.95**

(51) Int. Cl.6: **C09D 101/08**, C09D 151/00, C09D 101/18, C09D 175/04

(21) Anmeldenummer: **91120024.4**

(22) Anmeldetag: **25.11.91**

(54) **Lackbindemittelgranulate.**

(30) Priorität: **08.12.90 DE 4039195**

(43) Veröffentlichungstag der Anmeldung:
**17.06.92 Patentblatt 92/25**

(45) Bekanntmachung des Hinweises auf die
Patenterteilung:
**22.02.95 Patentblatt 95/08**

(84) Benannte Vertragsstaaten:
**AT BE CH DE DK ES FR GB IT LI NL SE**

(56) Entgegenhaltungen:
EP-A- 0 056 155
EP-A- 0 154 241
EP-A- 0 339 415
DE-A- 2 215 624
FR-A- 1 490 076

Derwent Publications Ltd., London, GB; AN
86-029252

(73) Patentinhaber: **Wolff Walsrode Aktiengesellschaft
Postfach 15 15
D-29655 Walsrode (DE)**

(72) Erfinder: **Kressdorf, Burkhard, Dr.
Ellinghäuser Strasse 15
W-3030 Walsrode (DE)**
Erfinder: **Lühmann, Erhard, Dipl.-Ing.
Kastanienweg 2
W-3036 Bomlitz 1 (DE)**
Erfinder: **Hoppe, Lutz, Dr.
Am Badeteich 8
W-3030 Walsrode (DE)**

(74) Vertreter: **Braun, Rolf, Dr. et al
Bayer AG
Konzernverwaltung RP
Patentabteilung
D-51368 Leverkusen (DE)**

**Beschreibung**

Gegenstand der Erfindung sind rieselfähige Lackbindemittelgranulate, die im wesentlichen aus Celluloseestern und Polymeren bestehen, Verfahren zu deren Herstellung und ihre Verwendung in Lacken, insbesondere in Polyurethanlacken.

Die Einarbeitung von Cellulosenitrat in Polyurethanlacken führt bekanntermaßen zu einer Verbesserung einer Reihe anwendungstechnischer Eigenschaften, wie der Trocknungsgeschwindigkeit, der Pigmentierbarkeit, dem Glanz und der Tiefziehbarkeit.

Das in die Polyurethanlacke einzuarbeitende Cellulosenitrat darf aufgrund gesetzlicher Anforderungen nicht in reinem, 100 %igem Zustand verwendet werden, da es im trockenen Zustand leicht durch Stoß oder Reibungen entzündet werden kann. Aus diesem Grunde müssen handelsübliche Cellulosenitrate entweder mit einem nicht gelierenden, flüssigen Anfeuchtungsmittel in einer Menge von mindestens 25 Gew.-% oder mit einem gelierenden Phlegmatisierungsmittel in einer Konzentration von mindestens 18 % behandelt sein, um damit die Gefahren bei Lagerung und Handhabung sowie dem Transport zu verringern.

Derartige Zusatzstoffe führen zu erheblichen Problemen bei der Verarbeitung von Polyurethanlacken. So sind die gängigsten Anfeuchtungsmitte für Cellulosenitrate Alkohole, wie Ethanol, Isopropanol oder n-Butanol, aber auch Wasser. Diese Anfeuchtungsmittel reagieren mit den in Polyurethanlacken eingesetzten Isocyanaten zu niedermolekularen Verbindungen, die die Qualität des Lackfilms deutlich herabsetzen. Außerdem ist ein erhöhter Anteil an Isocyanaten in diesen Lacken notwendig, um die OH-Gruppen des Anfeuchtungsmittels absättigen zu können.

Es wurde daher versucht, als Anfeuchtungsmittel gegenüber Isocyanaten inerte Lösungsmittel zu verwenden. Dabei wird entsprechend der DE-A-3 041 085 mit Alkohol und/oder Wasser angefeuchtetes Cellulosenitrat in einem Lösungsmittel, das das Cellulosenitrat löst, oder in einem azeotropen Gemisch, bestehend aus einem Löser und einem Nichtlöser, gelöst. Anschließend wird aus dieser Cellulosenitratlösung der Alkohol und/oder das Wasser destillativ abgetrennt. Dieses Verfahren zur Herstellung von Cellulosenitraten mit flüssigen Kohlenwasserstoffverbindungen, wie z.B. toluol- und xylolangefeuchteten Cellulosenitraten, ist aus sicherheitstechnischen Gründen, z.B. wegen der elektrostatischen Aufladung, schwierig zu handhaben und sehr kostenintensiv. Dies gilt auch für das in der US 3 284 253 beschriebene Verfahren zur Herstellung von mit einem flüssigen Kohlenwasserstoff angefeuchteten Cellulosenitrat, wobei auch hier die Wasserabtrennung durch eine azeotrope Destillation erfolgt.

In der EP-A-0 172 482 wird ein Verfahren beschrieben, bei dem Cellulosenitrat mit tert.-Butanol angefeuchtet wird, wobei ein übliches Verdrängerverfahren verwendet wird. Um mit diesem Verfahren die für die Polyurethanlacke notwendigen Wassergehalte von <0,1 Gew.-% einzustellen, ist ein extrem hoher Butanoleinsatz zur Wasserverdrängung notwendig. Zudem reagieren auch tertiäre Alkohole mit den Isocyanaten, wenn auch mit sehr geringer Reaktionsgeschwindigkeit. Außerdem ist das Butanol in vielen Lackformulierungen ein unerwünschter Zusatzstoff.

Aufgrund dieser Probleme mit den flüssigen Anfeuchtungsmitteln werden für Polyurethanlacke häufig Cellulosenitrate verwendet, die mit Weichmachern plastifiziert sind. Als derartige Weichmacher finden in der Hauptsache Dibutylphthalat oder Dioctylphthalat Anwendung (siehe DE-1 203 652, DE-1 470 860 und DE-1 570 121). Solche niedermolekularen Weichmacher, die keine Hydroxylgruppen enthalten, vermindern die Qualität einer Polyurethanlackschicht deutlich. Auch führen sie durch hohe Flüchtigkeit schon bei den häufig hohen Temperaturen im Verarbeitungsprozeß, z.B. bei beschichteten Aluminiumfolien, zu Ablagerungen an Verarbeitungsmaschinen und einer erhöhten Gesundheitsbelastung des Personals. Der Einbau von hydroxylgruppenhaltigen Weichmachern ist nach dem Stand der Technik allgemein nur mit einem erheblichen Mehraulwand, z.B. unter Verwendung von zusätzlichen Lösungsmitteln, die später destillativ entfernt werden müssen, technisch realisierbar. Die Vorgabe von Weichmachern schon im Cellulosenitrat schränkt die Möglichkeiten einer späteren Lackformulierung deutlich ein, zumal Weichmacherzusätze in Polyurethanlacken häufig unnötig sind und die Härte des Systems allein durch die Kombination von Weich- und Hartharzen und verschiedenen Polyisocyanaten in einem weiten Bereich einstellbar ist.

In der DE 38 36 779 wird ein Verfahren beschrieben, wobei eine Celluloseester-Polymer-Kombination, hergestellt aus einem Celluloseester und wenigstens einem polymerisierbaren Acrylsäure- bzw. Acrylatmonomer, beschrieben wird. Nach erfolgter Polymerisation entstehen Celluloseesterpolyacrylatgranulate, die auch in Polyurethanlacken eingesetzt werden können. Diese Produkte haben den Nachteil, mit den häufig eingesetzten hydroxylgruppenhaltigen Polyestern in Polyurethanlacken nur in geringem Umfang kompatibel zu sein.

In der DE-2 100 412 wird ein Verfahren zur Herstellung eines Cellulosenitrat-Polyesterpolyol-Gemisches beschrieben. Hierbei wird das Polyol in einem Gemisch von Wasser und Lösungsmittel in Gegenwart eines Schutzkolloids auf das Cellulosenitrat aufgebracht. Das Arbeiten mit Lösungsmitteln erfordert aufwendige Lösungsmittelrecyclinganlagen. Die Schutzkolloide verschlechtern die Lackeigenschaften beträchtlich.

Nach dem in der DE-2 215 624 beschriebenen Verfahren wird eine wäßrige Emulsion eines Polyols, das als Polyurethanpräpolymer fungiert, mit einer wäßrigen Cellulosenitratsuspension in Gegenwart eines Emulgators vermischt und erhitzt. Nach der Filtration wird der auf eine gewünschte Schicht kalandrierte Filterkuchen getrocknet. Dieses Verfahren ist auf Polyester und Polyether niedriger Viskosität, die noch unproblematisch emulgiert werden können, beschrankt. Dies sind aber Weichharze, die nur in Spezialanwendungen für Polyurethanlacke benötigt werden. Es entstehen weiche, staubende Produkte, die sich in der Brennbarkeit nicht von handelsüblichen Produkten unterscheiden. Dies schränkt die Einsetzbarkeit der hergestellten Produkte stark ein. Der hohe Emulgatoreinsatz (in den Beispielen mindestens 3 %), bezogen auf das Polyol, führt zu einer verminderten Wasserfestigkeit der Filme. Hochviskose Polyester mit einem breiteren Anwendungsbereich sind nach diesem Verfahren nicht herstellbar (siehe Vergleichsbeispiel).

Aufgabe der Erfindung war es, Cellulose-Polymer-Granulate bereitzustellen, die die geschilderten Nachteile nicht aufweisen und ein breites Anwendungsgebiet abdecken und insbesondere gute Rieselfähigkeit, verringerte Entflammbarkeit, geringe elektrostatische Aufladung und verbesserte lacktechnische Eigenschaften besitzen. Überraschenderweise wurde dies erreicht, indem polymerisierbare Monomere zusammen mit Polymeren auf Cellulosenitrat aufgebracht und polymerisiert wurden.

Gegenstand der Erfindung sind Celluloseester-Polymer-Granulate, enthaltend wenigstens einen Celluloseester A, wenigstens ein Polymer B und wenigstens ein polymerisierbares Monomer C, wobei ein Emulgatorgehalt von 0,001 bis 2 Gew.-% (bezogen auf die Summe der Komponenten A, B und C), vorzugsweise von 0,01 bis 1 Gew.-%, eingesetzt wird.

Als Celluloseester A eignen sich Celluloseacetobutyrat, Celluloseacetat und Cellulosenitrat, besonders bevorzugt Cellulosenitrat mit einem Stickstoffgehalt von 10,0 bis 12,6 Gew.-%.

Als Polymere B sind unvernetzte Harze aus z.B. folgenden Produktgruppen geeignet: gesättigte Polyester, ungesättigte Polyester, Alkydharze, Polyether, Polyacrylate, Ketonharze, Maleinatharze, Polycaprolactane, Polyurethane, Epoxidharze, Polyvinylharze, Aminoharze, Phenolharze und Silikonharze, insbesondere hochviskose Produkte dieser Stoffklassen. Besonders bevorzugt sind hochviskose, OH-gruppenhaltige Polyester und Polyether, Polyurethane, Alkydharze. Geeignet sind ebenfalls Mischungen aus den oben beschriebenen Polymeren.

Als polymerisierbare Monomere C eignen sich Vinylmonomere, insbesondere Acryl- und Methacrylsäure und deren Derivate, wie Butylacrylat, Butylmethacrylat, Hydroxypropylacrylat, Methylacrylat, Methylmethacrylat, Ethylmethacrylat, Ethylacrylat, Hydroxyethylacrylat und Hydroxybutylacrylat sowie Vinylester, Vinylchlorid und Vinylidenchlorid, außerdem Allylmonomere, Styrol und substituierte Styrole. Besonders bevorzugt sind Acryl- und Methacrylsäureester. Es sind auch Mischungen verschiedenster Vinylmonomere geeignet.

Die Herstellung der erfindungsgemäßen Produkte erfolgt durch Aufbringung einer wäßrigen Emulsion aus den Polymeren B und den Monomeren C auf eine wäßrige Celluloseestersuspension mit nachfolgender Polymerisation und anschließender Filtration und Trocknung des Feststoffes.

Die erfindungsgemäßen Granulate enthalten vorzugsweise 10 bis 82 Gew.-%, insbesondere 30 bis 82 Gew.-%, Celluloseester A, 10 bis 88 Gew.-%, insbesondere 20 bis 65 Gew.-%, Polymer B und 1 bis 50, vorzugsweise 2 bis 30, insbesondere 3 bis 20 Gew.-%, Monomere C.

Die Herstellung der wäßrigen Emulsion des Polymers B und des Monomeren C erfolgt nach Vermischen des Polymeren B mit dem Monomeren C nach bekannten Verfahren der Emulsionstechnik. Die Emulgierung erfolgt vorzugsweise unter Zusatz geeigneter Emulgatoren durch einfaches Verrühren aller Bestandteile. Es können allerdings auch Dissolver, Ultraschallmischer, Düsenmischer und andere bekannte Emulgiergeräte sowie Kombinationen dieser Geräte eingesetzt werden.

Zur Emulgierung eignen sich ionische sowie nichtionische Emulgatoren sowie Mischungen von ionischen und nichtionischen Emulgatoren.

Zur Herstellung der Granulate wird bevorzugt eine wäßrige Suspension eines Celluloseester vorgelegt und die Emulsion der Polymeren B und der Monomeren C zugegeben. Eine Zugabe der Polymeren B und der Monomeren C zum Celluloseester und nachfolgende Emulgierung ist ebenfalls möglich.

Nach Herstellung dieser resultierenden Emulsion, enthaltend den Celluloseester A, das Polymer oder die Polymerenmischung B und das Monomer oder die Monomerenmischung C, wird die Polymerisation in diesem System durch Zugabe eines geeigneten Initiators und Einstellung der für die Auslösung der Polymerisation notwendigen Temperatur gestartet. Je nach Art der Bestandteile des Einsatzes findet die Polymerisation unter Normaldruck oder erhöhtem Druck statt. Eine Polymerisation ist sowohl unter Überlagerung eines Inertgases als auch in normaler Atmosphäre möglich.

Die Polymerisation kann kontinuierlich, diskontinuierlich oder nach dem Kaskadenprinzip durchgeführt werden.

Die Reaktion erfordert einen radikalbildenden Initiator, der auf einmal, portionsweise oder kontinuierlich zugegeben wird.

Die Zugabe kann in Substanz oder in Lösung erfolgen. Auch Gemische mehrerer Initiatoren sind geeignet. Dabei können sowohl öllösliche als auch wasserlösliche Initiatoren zum Einsatz kommen, ebenfalls Gemische von wasserlöslichen und öllöslichen Initiatoren. Beispiel für wasserlösliche Initiatoren sind Peroxide wie z.B. Kaliumperoxodisulfat. Beispiele für öllösliche Initiatoren sind organische Peroxide und Hydroperoxide, wie Benzoylperoxid, Laurylperoxid und Cyclohexanonhydroperoxid, Percarbonate und Azoverbindungen, wie Azodiisobutyronitril.

Die Polymerisationsinitiatoren werden in einem Verhältnis von 0,1 bis 15 Gew.-%, vorzugsweise von 0,5 bis 10 Gew.-%, bezogen auf die Summe der polymerisierbaren Verbindungen, eingesetzt.

Die Molekulargewichte und Löslichkeiten können in der üblichen Weise durch Zusatz von Kettenüberträgern und Reglern gesteuert werden. Beispiele für einsetzbare Kettenüberträger sind Mercaptomethanol, Dodecylmercaptan, Mercaptopropionsäure und Bis-(isopropylxanthogen)disulfit.

Bevorzugte Polymerisationstemperaturen liegen zwischen 0 und 120 °C, vorzugsweise zwischen 20 bis 80 °C. Die Polymerisationsdauer kann einige Minuten bis mehrere Stunden betragen und liegt vorzugsweise im Bereich von 1 bis 8 h.

In einem zweiten Schritt kann gegebenenfalls ein weiteres Monomer oder eine Mischung von Monomeren zu der Granulatsuspension zugegeben und polymerisiert werden.

Die resuitierenden Celluloseester-Polymer-Granulate können aus der wäßrigen Phase durch gängige Separationsmethoden, wie Zentrifugieren oder Absieben, getrennt werden.

Eine Trocknung kann in gängigen Trockenaggregaten, wie z.B. Horden-, Band- oder Wirbelbett-Trocknern erfolgen. Die Trocknungstemperatur sollte 120 °C nicht überschreiten. Bevorzugt werden Temperaturen zwischen 40 und 80 °C.

Die resultierenden Granulate enthalten bevorzugt den Celluloseester A, das Polymer oder die Polymeren B und das polymerisierte Monomer oder die polymerisierte Monomerenmischung C. Die erfindungsgemäßen Produkte weisen eine enge Teilchengrößenverteilung und eine ausgezeichnete Rieselfähigkeit auf. Bemerkenswert ist hierbei, daß allgemein kein Feinstaub entsteht und damit ein deutlich verringertes Gefahrenpotential im Vergleich zu bekannten celluloseesterhaltigen Produkten aufgrund damit verringerter elektrostatischer Aufladung vorliegt.

Die resultierenden Granulate weisen im Vergleich zu handelsüblichen Produkten mit den Weichmachern Dibutylphthalat und Dioctylphthalat eine deutlich verringerte Brennbarkeit auf (siehe Beispiele 1 bis 10).

Die erfindungsgemäßen Celluloseester-Polymer-Granulate sind allgemein in den bekannten Lösungsmitteln oder Gemischen für Celluloseesterbindemittel klar und gut löslich, insbesondere in Estern und Ketonen. Die erfindungsgemäßen Celluloseester-Polymergranulate können mit verschiedensten Lackbindemitteln und Lackadditiven kombiniert werden und sind dann, je nach Zusammensetzung der Celluloseester-Polymergranulate, für Lacke unterschiedlichster Anwendungsgebiete, wie z.B. Holz, Metall, Kunststoff, Papier, Folie, Leder und magnetische Datenträger, geeignet. Insbesondere sind sie beim Einsatz von OH-haltigen Polyestern und Alkydharzen als Polymer B für Polyurethanlacke in den o.g. Einsatzgebieten geeignet. Sie sind hierbei mit einer Vielzahl von Polyurethanlackbindemitteln sowohl aus dem Bereich der OH-gruppenhaltigen Polyester und Alkydharze als auch der OH-gruppenhaltigen Polyacrylate und den gängigen Isocyanaten kombinierbar.

Aber auch als Zusatzstoff für andere Lacke sind sie geeignet, wobei sie sich aufgrund des polymeren Charakters als besonders migrationsstabile Zusätze auszeichnen, besonders für Beschichtungen, die in Kontakt mit Lebensmitteln stehen.

Beispiele 1 bis 10:

Allgemeine Herstellung des Lackbindemittelgranulats:

In einem Glasrührgefäß wird unter Einsatz einer Dissolverscheibe eine 50 %ige, wäßrige Emulsion des Polymers B und der Monomerenmischung C gegebenenfalls unter Zusatz eines Kettenüberträgers und der Emulgatoren hergestellt. Hierbei wird das Wasser mit 1 bis 2 Gew.-% Emulgator (bezogen auf die Summe der Gewichte der zu emulgierenden Stoffe B und C) vorgelegt und das Gemisch aus Polymer B, Monomerenmischung C und dem Kettenübetträger zugetropft. Als Emulgator wird ethoxyliertes Nonylphenol mit ca. 50 Ethylenoxideinheiten/Mol eingesetzt.

Der Celluloseester wird in einem Reaktionsgefäß mit Wasser versetzt, bis eine rührfähige Aufschlämmung erhalten wird (Feststoff-Flüssigkeits-Verhältnis: ca. 1:3,5). Dieser Aufschlämmung wird der Initiator (0,05 bis 0,2 Gew.-%, bezogen auf die Summe des Gewichts aus dem Celluloseester A, dem Polymeren B und den Monomeren C und dann die oben beschriebene Emulsion in gewünschter Menge zugesetzt, nachfolgend die resultierende Emulsion auf 60°C erhitzt und bis zum Ende der Polymerisation bei dieser Temperatur belassen. Herstellungsbeispiele sind in Tabelle 1 angegeben.

Das Granulat wird abgesaugt und in einem Wirbelschichttrockner bei 50°C getrocknet.

Es wurden verschiedene Polymere B (siehe Tabelle 1) eingesetzt:

1. Mit nichttrocknenden Fettsäuren modifizierter, verzweigter Polyester (OH-Gehalt ca. 4 %) Desmophen® 1300 der Bayer AG, Leverkusen,

2. mit gesättigter, niedermolekularer Fettsäure modifizierter, verzweigter Polyester (OH-Gehalt ca. 5 %) Desmophen® RD 181 der Bayer AG, Leverkusen,

3. wenig verzweigter Polyester (OH-Gehalt ca. 5 %) Desmophen® 1200 der Bayer AG, Leverkusen,

4. mittelfettes, nichttrocknendes Alkydharz auf Phthalatbasis mit 43 % synthetischem Erdnußöl (OH-Gehalt ca. 4 %) Rokraplast® E 420 der Fa. Robert Kraemer, Bremen.

Im folgenden werden die Markennamen genannt.

Die Abbrandgeschwindigkeit wird über die Brandfortpflanzung in einer 10 cm langen Metallrinne, die mit 1 g des zu prüfenden Produktes gefüllt war, bestimmt. Dazu wird das Produkt an einer Seite entzündet und die Zeit bestimmt, die der Brandherd bis zum Erreichen der gegenüberliegenden Querseite benötigte. Als Referenz diente die Abbrandzeit eines handelsüblichen Cellulosenitrats der Normtype 34 E mit 18 % Dibutylphthalat (Walsroder Nitrocellulose-Chips E 330) von <1 s.

Zur anwendungstechnischen Ausprüfung werden die Produkte 25 gew.-%ig in einem Lösungsmittelgemisch (Ethylmethylketon:Methylisobutylketon:Xylol:Cyclohexanon = 1:1:1,8:0,2 Vol.-Teile) gelöst und die Klarlöslichkeit beurteilt.

Zur Beurteilung des Härtungsverhaltens werden diese Lösungen mit 6 Gew.-Teilen Polyisocyanat Desmodur N der Bayer AG Leverkusen, auf 100 Gew.-Teile Lack versetzt und in einer Schichtstärke von 180 μm auf eine Glasplatte aufgezogen. Beurteilt wird die Pendelhärte nach DIN 53 157 und die Wasserfestigkeit nach DIN 53 168 nach 18 h Härtungszeit bei Raumtemperatur.

Vergleichsbeispiel 1:

Es wurde versucht, nach Beispiel 1 der DE-2 215 624 den gesättigten Polyester Desmophen 1300 in Wasser zu dispergieren, um ihn anschließend auf Cellulosenitrat aufzubringen. Es konnte keine Emulsion nach diesem Verfahren hergestellt werden.

5

**Tabelle 1**

| Versuchsnummer | | 1 | 2 | 3 | 4 | 5 | 6 | 7 | 8 | 9 | 10 |
|---|---|---|---|---|---|---|---|---|---|---|---|
| **Celluloseester A:** | | | | | | | | | | | |
| Nitrocellulose, Normtyp 34 E | (Gew.-%) | 70 | | | | | | | | | |
| Nitrocellulose, Normtyp 27 A | (Gew.-%) | | | | | | | | | | |
| Celluloseacetobutyrat | (Gew.-%) | | 70 | 70 | 70 | 70 | 70 | 70 | 70 | 80 | 60 |
| **Polymere B:** | | | | | | | | | | | |
| Desmophen 1300 | (Gew.-%) | 24 | 27 | 21 | 27 | | | | 27 | 17,9 | 36 |
| Desmophen RD 181 | (Gew.-%) | | | | | 27 | | | | | |
| Desmophen 1200 | (Gew.-%) | | | | | | 27 | | | | |
| Rokraplast AE 420 | (Gew.-%) | | | | | | | 27 | | | |
| **Monomere C:** | | | | | | | | | | | |
| Butylacrylat | (Gew.-%) | 5 | 2,5 | 7,5 | 2,9 | 2,5 | 2,5 | 2,5 | 2,6 | 2,0 | 3,3 |
| Bis(isopropylxanthogen)disulfit | (Gew.-%) | 0,0006 | 0,03 | 0,009 | 0,03 | 0,003 | 0,003 | 0,003 | 0,003 | 0,002 | 0,04 |
| Hydroxypropylmethacrylat | (Gew.-%) | 1 | 0,5 | 1,5 | 0,1 | 0,5 | 0,5 | 0,5 | 0,4 | 0,1 | 0,7 |
| Emulgator (bezogen auf A,B,C) | (Gew.-%) | 0,3 | 0,5 | 0,3 | 0,5 | 0,3 | 0,3 | 0,3 | 0,3 | 0,25 | 0,7 |
| Klarlöslichkeit | | ja | ja | ja | ja | ja | ja | ja | ja | ja | ja |
| nichtflüchtiger Anteil | | 99,3 | 99,2 | 99,3 | 99,4 | 99,3 | 99,2 | 99,3 | 99,5 | 99,1 | 99,4 |
| Abbrandzeit | (s) | 7,5 | 11 | 7,0 | 6,2 | 5,1 | 4,5 | 4,2 | 4,0 | 3 | 9 |
| Pendelhärte nach DIN 53 157 | (s) | 201 | 183 | 198 | 190 | 185 | 180 | 176 | 179 | 195 | 170 |
| Wasserbeständigkeit nach DIN 53 168 | | bestanden | bestanden | bestanden | bestanden | bestanden | bestanden | bestanden | bestanden | bestanden | bestanden |

## Patentansprüche

1. Lackbindemittelgranulate, enthaltend wenigstens einen Celluloseester A aus der Gruppe Celluloseacetobutyrat, Celluloseacetat und Cellulosenitrat, wenigstens ein Polymer B aus der Gruppe gesättigte Polyester, ungesättigte Polyester, Alkydharze, Polyether, Polyacrylate, Ketonharze, Maleinatharze, Polycaprolactane, Polyurethane, Epoxidharze, Polyvinylharze, Aminoharze, Phenolharze und Silikonharze und wenigstens ein polymerisierbares Vinylmonomer C.

**2.** Lackbindemittelgranulat nach Anspruch 1, dadurch gekennzeichnet, daß der Celluloseester Celluloseacetobutyrat, Celluloseacetat und/oder Cellulosenitrat in einer Konzentration von 10 bis 82 Gew.-% vorliegt.

**3.** Lackbindemittelgranulat gemäß einem der Ansprüche 1 oder 2, dadurch gekennzeichnet, daß die Polymer-Komponente B in einer Konzentration von 10 bis 88 Gew.-% vorliegt.

**4.** Lackbindemittelgranulat gemäß einem der Ansprüche 1 bis 3, dadurch gekennzeichnet, daß es 1 bis 50 Gew.-% eines polymerisierten Vinylmonomeren C oder eine Mischung von Vinylmonomeren C enthält.

**5.** Lackbindemittelgranulate gemäß einem der Ansprüche 1 bis 4, dadurch gekennzeichnet, daß die Vinylmonomeren C Acrylsäure und/oder Methacrylsäure oder Derivate dieser Säuren sind.

**6.** Verfahren zur Herstellung von Lackbindemittelgranulaten gemäß einem der Ansprüche 1 bis 5, dadurch gekennzeichnet, daß man eine wäßrige Emulsion aus den Polymeren B und den Vinylmonomeren C auf eine wäßrige Celluloseestersuspension aufbringt, die Vinylmonomeren C unter Einsatz eines Initiators polymerisiert und das resultierende Produkt filtriert und trocknet.

**7.** Verwendung der Lackbindemittelgranulate gemäß einem der Ansprüche 1 bis 5 zur Herstellung von Lacken.

**8.** Verwendung gemäß Anspruch 7, dadurch gekennzeichnet, daß Polyurethanlacke hergestellt werden.

**Claims**

**1.** Paint binder granules containing at least one cellulose ester A from the group consisting of cellulose acetobutyrate, cellulose acetate and cellulose nitrate, at least one polymer B from the group consisting of saturated polyesters, unsaturated polyesters, alkyd resins, polyethers, polyacrylates, ketone resins, maleate resins, polycaprolactones, polyurethanes, epoxy resins, polyvinyl resins, amino resins, phenolic resins and silicone resins and at least one polymerizable vinyl monomer C.

**2.** Paint binder granules as claimed in claim 1, characterized in that the cellulose ester cellulose acetobutyrate and/or cellulose nitrate is present in a concentration of 10 to 82% by weight.

**3.** Paint binder granules as claimed in claim 1 or 2, characterized in that the polymer component B is present in a concentration of 10 to 88% by weight.

**4.** Paint binder granules as claimed in any of claims 1 to 3, characterized in that they contain 1 to 50% by weight of a polymerized vinyl monomer C or a mixture of vinyl monomers C.

**5.** Paint binder granules as claimed in any of claims 1 to 4, characterized in that the vinyl monomers C are acrylic acid and/or methacrylic acid or derivatives of these acids.

**6.** A process for the production of the paint binder granules claimed in any of claims 1 to 5, characterized in that an aqueous emulsion of the polymers B and the vinyl monomers C is applied to an aqueous cellulose ester suspension, the vinyl monomers C are polymerized using an initiator and the resulting product is filtered and dried.

**7.** The use of the paint binder granules claimed in any of claims 1 to 5 for the production of paints.

**8.** The use claimed in claim 7, characterized in that polyurethane paints are produced.

**Revendications**

1. Granulés de liant pour peintures, contenant au moins un ester de cellulose A du groupe de l'acétobutyrate de cellulose, de l'acétate de cellulose et du nitrate de cellulose, au moins un polymère B du groupe de polyesters saturés, de polyesters insaturés, de résines alkyd, des polyéthers, de polyacrylates, de résines cétoniques, de résines de maléate, de polycaprolactames, de polyuréthannes, de résines époxy, de résines polyvinyliques, des résines aminées, de résines phénoliques et de résines de silicone et au moins un monomère vinylique C polymérisable.

2. Granulé de liant pour peintures suivant la revendication 1, caractérisé en ce que l'ester de cellulose, à savoir acétobutyrate de cellulose, acétate de cellulose et/ou nitrate de cellulose, est présent à une concentration de 10 à 82 % en poids.

3. Granulé de liant pour peintures suivant l'une des revendications 1 et 2, caractérisé en ce que le composant polymère B est présent à une concentration de 10 à 88 % en poids.

4. Granulé de liant pour peintures suivant l'une des revendications 1 à 3, caractérisé en ce qu'il contient 1 à 50 % en poids d'un monomère vinylique C polymérisable ou d'un mélange de monomères vinyliques C.

5. Granulés de liant pour peintures suivant l'une des revendications 1 à 4, caractérisés en ce que les monomères vinyliques C consistent en acide acrylique et/ou en acide méthacrylique ou en dérivés de ces acides.

6. Procédé de production de granulés de liant pour peintures suivant l'une des revendications 1 à 5, caractérisé en ce qu'on verse une émulsion aqueuse des polymères B et des monomères vinyliques C sur une suspension aqueuse d'ester de cellulose, on polymérise les monomères vinyliques C en utilisant un initiateur et on filtre et sèche le produit résultant.

7. Utilisation des granulés de liant pour peintures suivant les revendications 1 à 5 pour la production de peintures.

8. Utilisation suivant la revendication 7, caractérisé en ce qu'on produit des vernis de polyuréthanne.